(19) Europäisches Patentamt
European Patent Office
Office européen des brevets

(11) **EP 3 470 751 B1**

(12) **EUROPEAN PATENT SPECIFICATION**

(45) Date of publication and mention
of the grant of the patent:
**22.09.2021 Bulletin 2021/38**

(21) Application number: **17809779.6**

(22) Date of filing: **01.06.2017**

(51) Int Cl.:
*G02B 3/12* [(2006.01)]        *G02B 3/08* [(2006.01)]
*F24S 23/30* [(2018.01)]        *F24S 30/452* [(2018.01)]

(86) International application number:
**PCT/ES2017/070390**

(87) International publication number:
**WO 2017/212092 (14.12.2017 Gazette 2017/50)**

(54) **SOLAR ENERGY CONDENSER SYSTEM**

SOLARENERGIEKONDENSATORSYSTEM

SYSTÈME CONDENSATEUR D'ÉNERGIE SOLAIRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **09.06.2016 ES 201630786**

(43) Date of publication of application:
**17.04.2019 Bulletin 2019/16**

(73) Proprietor: **Santander Y Santana, S.L.**
**35012 LAS PALMAS DE GRAN CANARIA (ES)**

(72) Inventors:
• **SANTANDER CERBELL, Roberto**
**35012 LAS PALMAS DE GRAN CANARIA (ES)**
• **SANTANA MALDONADO, Alejandro José**
**35012 LAS PALMAS DE GRAN CANARIA (ES)**

(74) Representative: **López Camba, Emilia**
**SILEX IP**
**Poeta Joan Maragall, 9, Esc. Izq., 3º Izq.**
**28020 Madrid (ES)**

(56) References cited:
EP-A1- 0 840 075        DE-A1-102014 107 804
ES-A1- 2 281 231        FR-A1- 2 412 859
FR-A1- 2 478 801        US-A- 4 194 949
US-A- 4 284 839        US-A- 4 376 372
US-A- 4 496 787        US-A1- 2009 205 638
US-A1- 2010 212 660    US-A1- 2013 206 135
US-B1- 6 504 654

**Description**

## OBJECT OF THE INVENTION

The object of the present invention, as established in the title, is a Solar Energy Condenser system that includes a cylindrical liquid lens and a black body absorber, forming a Medium Temperature solar energy condenser system, that is, a piece of equipment designed to operate in a temperature range of up to 600 °C.

The system consists of one or more collectors that are designed to capture solar energy and concentrate it through refraction, within a high-performance absorber, where the basic components of each collector are found:

Optical System for capturing solar energy formed by a set of cylindrical, maximum precision, light weight and low cost "liquid lenses" that concentrate the solar flow.

High performance "black body" solar flow Absorber System mounted under the optical collection system.

Tracking system, or "total" solar tracker (azimuthal and vertical), that allows its position to be fixed, continuously, perpendicular to the rays of the Sun of the optical collection system and of the solar flow Absorber system.

These systems are designed to generate electricity, for industrial cooling, heating, air conditioning, desalination, etc. and for certain thermochemical processes that require such temperatures.

This invention is characterised by the special constructive parameters and the technical design of the optical collection system and the solar flow Absorber System, which allow the system's collectors to be operated, with an efficiency far superior to that achieved thus far with conventional mirror collection systems.

Therefore, the present invention is defined within the scope of solar energy concentrator systems.

## BACKGROUND OF THE INVENTION

Ordinary lenses have serious drawbacks when it comes to capturing solar energy: their high cost, excessive weight and spherical aberration, which hinders or prevents the construction of large lenses, for the purpose of capturing large amounts of solar energy

(i) In the state of the art are known the following documents:

(ii) FR2412859 A1 discloses an optical element which is intended to replace solid glass lenses, prisms etc. The element is gel or liquid filled and overcomes difficulties of weight and manufacture of the solid versions.

(iii) US4376372 A discloses an improved solar energy conversion apparatus, including duration-of-operation extension apparatus for effectively converting solar radiation thermal energy, on a high-efficiency basis, into captive or stored thermal energy in a captive working medium in a closed-cycle power conversion system (usually consisting of flow-path defining apparatus, such as piping, tubing or the like) and adapted at an output end to be connected to any of various different types of thermal energy utilization apparatus which will effectively reduce the temperature and/or pressure of the working medium as a consequence of the effective extraction of substantial quantities of energy from the working medium by such utilization apparatus.

In the state of the art, the Spanish Patent publication number ES 2 281 231 is known, (P200500134 of 25 January 2005), entitled "Solar Liquid Lens", which generically defines a solar energy concentrator lens, which is an evolution of the Fresnel Lens, invented in the early nineteenth century, and similar to this, it is characterised due to the fact that it has a thin lens, with the option of supporting a large size, which has reached the present day without its optical characteristics being improved, allowing an acceptable degree of concentration, for use as a solar energy collector, which, with a reduced focal distance projects a focus perfectly concentrated in a small environment.

The liquid solar lens defined in this patent is characterised by its constructive form, that is: with curved facets on both sides, without spherical or geometrical aberration, thin, of great size, of reduced focal distance and made up of various vessels in which a series of refracting fluids are housed, whose variable refractive index grows progressively from the optical axis towards the edges of the lens, which, in short, are grouped forming modules of several vessels, in biconvex configurations in the central modules of the lens, becoming flat-convex and finally concave-convex in the rest of the modules, in a smooth transition and all the ridges or furrows being minimised, as well as having the connecting lateral face of the upper and lower facets of each module flat and inclined towards the optical axis, eliminating the spherical or geometric aberration by incorporating into the vessels refracting fluids with an adequate refractive index in each vessel, a reduced volume, minimum thickness, weight and adequacy of the slope of the curvature of each facet.

The above-mentioned lens and solar flow collector, is characterised by its reduced weight, low cost and by the capacity it has to correct the spherical aberration, which confers maximum precision, short focal distance and a perfect control of the luminous focus, concentrating it in an environment with minimum dimensions, configuring itself as a high efficiency collector.

However, the high concentration of the solar flow generates high thermal losses when conventional absorption systems are used, since the amount of radiant thermal emission per unit of surface emitted by a hot body, is done so depending on the fourth power of its temperature, according to the Stefan-Boltzman equation:

$$Q / A = Q / A \, rad = \varepsilon\sigma T^{4}$$

where:

$\varepsilon$ = Emittance

$$\sigma = 5'72 \times 10^{-8} \, W/cm^{2} \times degree^{4}$$

T = Temperature (in Kelvin degrees)

Therefore, the object of the present invention to develop a solar energy condenser system that avoids high thermal losses when conventional absorption systems are used, developing a solar energy condenser system with a liquid lens like the one described below and as defined in the independent claim 1.

## DESCRIPTION OF THE INVENTION

The object of the invention is a solar energy condenser system made up of one or more pieces of collecting equipment designed to capture and absorb sunlight, previously concentrated by refraction, by means of cylindrical liquid lenses which collect the solar flow, which project a linear focus, perfectly concentrated in a minimum environment, inside a "black body" absorption chamber, perimetrically isolated with a ceramic-type material except for on its longitudinal orifice or absorption window, of a reduced width, located in its upper part, through which the refracted solar flow penetrates, reflected in the speculated internal walls and projected onto absorbent tubes of selective material, through which a thermal fluid circulates, producing the heat transmission of most of the solar energy captured, with maximum efficiency, by avoiding direct thermal losses of the absorbing conduits through the absorption window.

Placing the focus projected by the lenses in a black body absorption chamber allows the maximum yield of the captured solar energy to be obtained and overcomes the disadvantages of high thermal losses in conventional absorption systems.

The use of what in Physics is called black body, is an element capable of absorbing all the solar energy it receives. Conceptually, the "black body" is similar to a completely closed cavity, in which a small orifice is provided through which the solar flow penetrates, reducing to a minimum the thermal losses due to the emittance that occurs inside it.

The solar energy condenser system comprises one or more collectors, as defined in independent claim 1.

The Optical System may be formed by a set of cylindrical liquid lenses that generate linear, perfectly-concentrated spotlights and whose dimensions must be adequate for their manageability.

The absorption system may be formed by a black body, perimetrally-insulated absorption chamber, and provided with an inverted truncated-pyramidal shaped absorption window, of minimum dimensions, adjusted to the dimensions of the refracted light bulb, where said absorption window is located in the upper zone of said absorption chamber, through which the refracted solar flow penetrates, through the concentrating optical system, in order for the thermal losses by radiation through the window itself to be minimal.

The absorption chamber may have lateral walls with a cylindrical surface, speculated and covered with a material or metallic sheet of high reflectance and insulated perimetrally with a suitable refractory ceramic-type material. It defines an interior space where the absorbing element or absorber (8) is housed, on which the super concentrated luminous flux is projected, made with selective material to capture the greatest amount of energy possible, potentially being made of aluminium, copper, steel, black chrome, etc., to obtain a high absorption, low emittance, being able to withstand the working temperatures of the thermal processes that are developed in them, transmitting heat energy to a thermal fluid that circulates inside (potentially being gases, even pulverized solids)

On the sides of the absorption window, there may be reflective plates, parallel to the plane of symmetry of the solar flow, in order to reflect and channel towards the tubes or auxiliary absorber plates, the emittance coming from the absorption chamber and from the elements contained therein, preventing such calorific rays from bouncing indeterminately inside the absorption chamber.

The optical system may have an indeterminate number of cylindrical liquid collector lenses, depending on the power required.

Black body absorption chambers may be manufactured or designed with different geometries, provided that they comply with the requirements to obtain the maximum thermal yield from the solar energy captured.

The load-bearing and resistant structure, which can adopt the appropriate shape and size to fulfil the function of a total solar tracker (azimuthal and vertical).

The collection module which may adopt the appropriate shape, dimensions and configuration to fulfil the function of keeping the lenses and the absorption chamber insulated inside.

Any mechanism can be used for the system of movement, whether electrical, hydraulic mechanic and of any other nature that fulfils the function of providing the equipment in the solar tracking with complete movement.

Any of the existing or developed technologies can be used for the solar tracking system, both individually and for the set of equipments that make up a solar park, in a computerised way.

The industrial application of the present invention responds to the need to achieve a high level of thermal absorption performance of solar energy, concentrated by large lenses, which generate high intensity bulbs, which require an absorption surface suitable for the high concentration of light of the spotlight, depending on the working temperatures at the medium temperature level (up to 600 °C), for the production of electricity with turbines, industrial cooling, heating, air conditioning, desalination of seawater, etc., and the generation of other thermochemical processes to obtain certain fuels and raw materials such as: Methanol, Hydrogen, C, CO2, etc.

$\Delta T > 600°C$ (Through methane cracking)

$CH_4 \rightarrow 2H_2 + C$ ( Cat : 30%Ni/Al2O3 easy to regenerate) and (Molybdenum Oxide over Zeolite).

$\Delta$ 300/400°C

$CO + 2H_2 \rightarrow CH_3 \cdot OH$ (100/200 Atm).

$\Delta$ 500°C

$CO + H_2O \rightarrow CO_2 + H_2$ (-31.38Kcal) (Catalyst: mixture of Oxides of iron, chromium and Thorium) (65.7% H2, 16.1% CO2, 17.6% H2O, 0.4% CO).

Unless otherwise indicated, all the technical and scientific elements used in this report have the meaning usually understood by the normal expert in the technique to which this invention belongs. In the practice of this invention, procedures and materials similar or equivalent to those described in the report can be used.

In the description and claims, the word "comprises" and its variants do not aim to exclude other technical characteristics, additives, components or steps. For the persons skilled in the art, other objects, advantages and characteristics of the invention will be partly inferred from the description and partly from the practice of the invention.

## EXPLICATION OF THE FIGURES

To supplement the description being given and with the aim of promoting a better understanding of the characteristics of the invention, in accordance with a preferred example of a practical embodiment of the same, a set of drawings are provided as an integral part of the description in which, for merely illustrative purposes, the following has been represented:

Fig.1 details the structure and arrangement of the elements of a solar energy condenser system.
Fig. 2 , shows a cross-section representation of a complete solar energy collection module.
Fig. 3 depicts the black body absorption chamber (2) in detail with a specific configuration.
Fig. 4 shows a vertical representation of a solar energy collector
Fig. 5 shows the diagram of the thermal fluid inlet and outlet inside the equipment collection module.
Figure 6 shows a representation of a cylindrical liquid solar lens as part of the invention.

## PREFERRED EMBODIMENT OF THE INVENTION

In view of the Figures, a preferred embodiment of the proposed invention is described below.

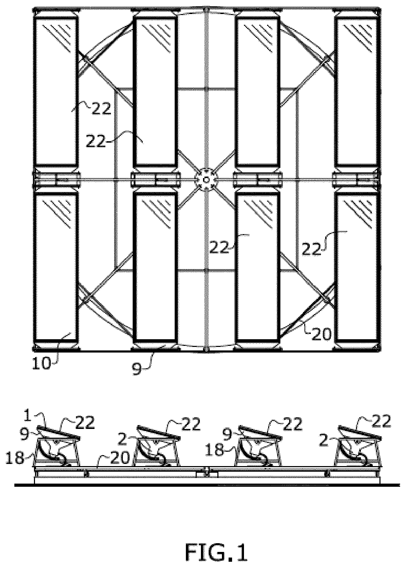

Figure 1 shows a solar energy condenser system similar to the one object of the invention and that includes several solar energy collectors (22), arranged on a horizontal bearing structure (20).

Each of the collectors (22) comprises a collection module (9) arranged on a load-bearing structure (18), where the collection module (9) houses a cylindrical liquid lens (1) and an absorption chamber (2).

The liquid lens (1) is protected by a sheet of impact-resistant glass with low reflectance (10), all of which provides total insulation against the action of atmospheric agents.

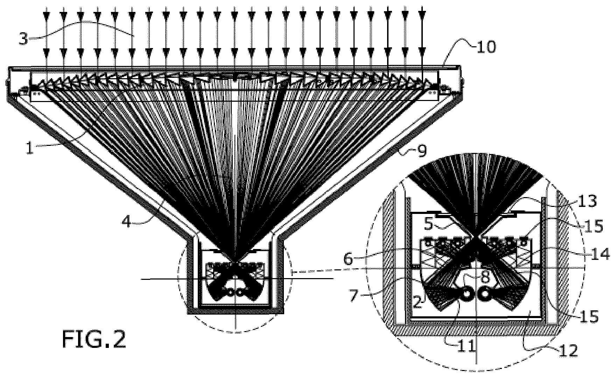

Figure 2 shows a collection module (9) consisting of a hermetically sealed, watertight enclosure containing a liquid lens (1) with a cylindrical surface protected by the glass plate (10), which is affected by the external solar flow (3) and after passing through the liquid lens (1), a concentrated solar flow (4) is obtained

The collection module (9) has an absorption chamber (2) into which the concentrated solar flow (4) enters through an absorption window (5) which has an inverted pyramidal trunk shape and minimum dimensions. The absorption chamber (2) has external perimeter insulation (12), while inside it is lined with material or with a reflective metallic sheet (7) so that the solar flow (6) inside the chamber is reflected on this lining to achieve an ultra-concentrated flow (11) that affects absorbent tubes (8) through which a heat transfer fluid circulates, producing heat transfer with minimum losses and high efficiency.

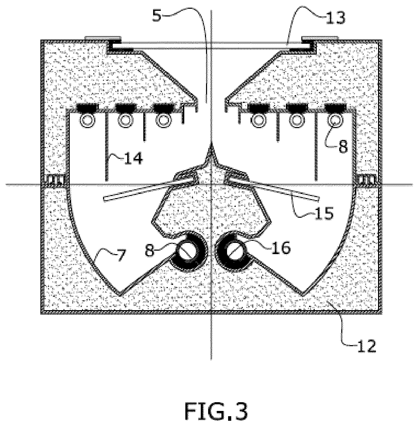

Figure 3 , which shows the absorption chamber (2) in detail, include the constructive details of:

a glass plate (pyrex or quartz) (13), to prevent dirty from entering its interior, this arrangement being a complementary embodiment

auxiliary means of thermal absorption to divert the reflectance of the solar flow towards the auxiliary absorbent tubes or plates and to avoid the thermal emittance and convection coming from the elements housed in the absorption chamber (2), in which the form of embodiment shown consists of:

○ reflective sheets (14) placed inside the absorption chamber and, on the sides of the absorption window (5), symmetrical ones to the plane of symmetry of the solar flow, which receive the thermal emissions from the absorption chamber ○ anti-emittance sheets of glass (15),

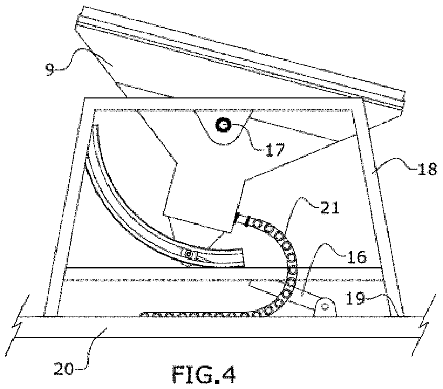

Figure 4 shows the representation of a solar energy collector which, as can be seen, comprises: the collection module (9) mounted on the load-bearing structure (18) by means of a joint (17) which allows it to turn with respect to a horizontal axis.

The collection module (9) is connected to the horizontal structure (20) by means of anchors (19) and is equipped with a hydraulic or electric vertical displacement mechanism (16) of the collection module (9).

The collection module (9) has mobile connection mechanisms (21) between the collection module (9) and the rotating horizontal structure (20), to prevent it from being displaced, due to the effect of solar tracking.

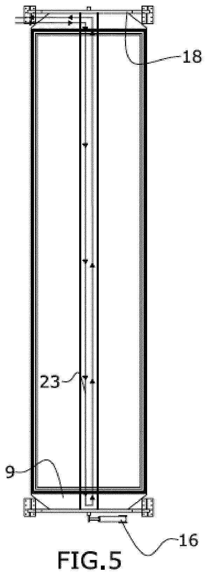

Figure 5 shows a collection module (9) with the heat transfer fluid inlet and outlet diagram (23).

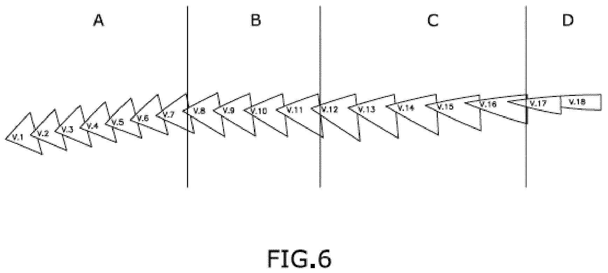

Figure 6 shows a possible embodiment of the liquid lens (1) which in the embodiment shown includes half of that lens, being symmetrical, being comprised of two symmetrical halves, 18 vessels (V-1 to V-18), each of the halves and which would have the following parameters for a construction with precision for a solar liquid lens 150 cm wide, with 65.5 cm focal length for appropriate handling.

| MODULES | Vessels | I.R | Radius of upper face Curvature | Radius of lowe face Curvature |
|---|---|---|---|---|
| D | v-18 | 1'33 | 725 mm | 325 mm |
| | v-17 | 1'33 | | 385 mm |
| C | v-16 | 1'38 | 725 mm | 600 mm |
| | v-15 | 1'38 | | 1000 mm |
| | v-14 | 1'38 | | 1900 mm |
| | v-13 | 1'38 | | 4500 mm |
| | v-12 | 1'38 | | Straight |
| B | v-11 | 1'43 | 725 mm | 5600 mm |
| | v-10 | 1'43 | | 4500 mm |
| | v-9 | 1'43 | | 3300 mm |
| | v-8 | 1'43 | | 2800 mm |
| A | v-7 | 1'46 | 725 mm | 2200 mm |
| | v-6 | 1'46 | | 1800 mm |
| | v-5 | 1'46 | | 1647 mm |
| | v-4 | 1'46 | | 1697 mm |
| | v-3 | 1'46 | | 1600 mm |

(continued)

| MODULES | Vessels | I.R | Radius of upper face Curvature | Radius of lowe face Curvature |
|---------|---------|-----|-------------------------------|-------------------------------|
| | v-2 | 1'46 | 725 mm | 1500 mm |
| | v-1 | 1'46 | | 1500 mm |

**Claims**

1. Solar energy condenser system comprising one or more solar energy collectors where each collector (22) in turn comprises

   • a collection module (9) formed by a hermetic and watertight enclosure, containing inside the elements of an optical system consisting of a liquid lens (1) with a cylindrical surface and of an absorption system consisting of an absorption chamber (2) through whose interior absorber tubes (8) run,
   • a sturdy, load-bearing structure (18) on which the collection module (9) is mounted and which is equipped with dual-axis solar tracking systems, wherein

   - the absorption chamber (2) has an absorption window (5) with an inverted pyramidal trunk shape, where the absorption chamber (2) has an external perimeter insulation (12), while inside it is lined with material or a reflective metallic sheet (7),
   - the absorption window (5) is equipped with a glass plate of pyrex or quartz type (13), to prevent dirt from entering into the interior of the absorption chamber (2),
   - means (14, 15) are placed inside the absorption chamber (2) for diverting solar energy towards the absorber tubes (8) and avoid thermal emittance from elements housed within the absorption chamber (2).

2. Solar energy condenser system, according to Claim 1 wherein the means diverting solar energy are reflective sheets (14) parallel to a plane of symmetry and the means for avoiding thermal emittance are anti-emittance sheets of glass (15).

3. Solar energy condenser system, according to any of the above claims, **characterised by** the fact that the collection module (9) is mounted on the load-bearing structure (18) by means of a joint (17), where this load-bearing structure has a hydraulic or electrical vertical displacement mechanism (16) of the collection module, while the collection module (9) has mobile connection mechanisms (21) between the collection module (9) and a rotating horizontal structure (20) on which the load-bearing structure (18) is mounted.

**Patentansprüche**

1. Solarenergiekondensatorsystem, das einen oder mehrere Solarenergiekollektoren umfasst, wobei jeder Kollektor (22) seinerseits umfasst

   - ein Kollektormodul (9), gebildet durch ein hermetisches und wasserdichtes Gehäuse, im Inneren die Elemente eines optischen Systems enthaltend, bestehend aus einer Flüssigkeitslinse (1) mit zylindrischer Oberfläche und einem Absorptionssystem, bestehend aus einer Absorptionskammer (2), durch die innen Absorbierrohre (8) verlaufen,
   - eine solide, tragende Struktur (18), auf der das Kollektormodul (9) montiert ist und die mit zweiachsigen Solarnachführsystemen ausgestattet ist,
   wobei
   - die Absorptionskammer (2) ein Absorptionsfenster (5) mit einer umgekehrten pyramidenstumpfförmigen Form aufweist, wobei die Absorptionskammer (2) eine äußere Umfangsisolierung (12) aufweist, während sie innen mit einem Material oder einem reflektierenden Metallblech (7) ausgekleidet ist,
   - das Absorptionsfenster (5) ist mit einer Glasplatte vom Typ Pyrex oder Quarz (13) ausgestattet, um das Eindringen von Schmutz in das Innere der Absorptionskammer (2) zu verhindern,
   - im Inneren der Absorptionskammer (2) befinden sich Mittel (14, 15), die die Sonnenenergie zu den Absorbierrohren (8) umleiten und die Wärmeabstrahlung von Elementen, die sich in der Absorptionskammer (2) befinden, vermeiden.

**2.** Solarenergiekondensatorsystem nach Anspruch 1, wobei die Mittel zur Ableitung der Solarenergie parallel zu einer Symmetrieebene verlaufende Reflexionsscheiben (14) sind und die Mittel zur Vermeidung von Wärmeabstrahlung anti-emittierende Glasscheiben (15) sind.

**3.** Solarenergiekondensatorsystem nach einem der vorigen Ansprüche, **dadurch gekennzeichnet, dass** das Kollektormodul (9) mittels eines Gelenks (17) an der Tragstruktur (18) montiert ist, wobei diese Tragstruktur einen hydraulischen oder elektrischen Vertikalverschiebungsmechanismus (16) des Kollektormoduls aufweist, während das Kollektormodul (9) bewegliche Verbindungsmechanismen (21) zwischen dem Kollektormodul (9) und einer rotierenden horizontalen Struktur (20) aufweist, an der die Tragstruktur (18) montiert ist.

**Revendications**

**1.** Système condensateur d'énergie solaire comprenant un ou plusieurs collecteurs d'énergie solaire où chaque collecteur (22) comprend

- à son tour un module de collecte (9) formé par une enceinte hermétique et étanche à l'eau, contenant à l'intérieur les éléments d'un système optique constitué d'une lentille liquide (1) avec une surface cylindrique et d'un système d'absorption constitué d'une chambre d'absorption (2) à travers laquelle s'étendent des tubes d'absorption intérieurs (8),
- une structure porteuse robuste (18) sur laquelle le module de collecte (9)
est monté et qui est équipée de systèmes de suivi solaire à deux axes, dans lequel
- la chambre d'absorption (2) a une fenêtre d'absorption (5) en forme de tronc pyramidal inversé, où la chambre d'absorption (2) présente une isolation périphérique externe (12), tandis qu'à l'intérieur elle est revêtue d'un matériau ou d'une feuille métallique réfléchissante (7),
- la fenêtre d'absorption (5) est équipée d'une plaque de verre de type pyrex ou quartz (13), pour empêcher la saleté de pénétrer à l'intérieur de la chambre d'absorption (2),
- des moyens (14, 15) sont placés à l'intérieur de la chambre d'absorption (2) pour dévier l'énergie solaire vers les tubes absorbeurs (8) et éviter l'émission thermique des éléments logés dans la chambre d'absorption (2).

**2.** Système condensateur d'énergie solaire, selon la revendication 1, dans lequel les moyens de déviation de l'énergie solaire sont des feuilles réfléchissantes (14) parallèles à un plan de symétrie et les moyens pour éviter l'émission thermique sont des feuilles de verre anti-émission (15).

**3.** Système condensateur d'énergie solaire, selon l'une quelconque des revendications précédentes, **caractérisé par le fait que** le module de collecte (9) est monté sur la structure porteuse (18) au moyen d'une articulation (17), cette structure porteuse comportant un mécanisme de déplacement vertical hydraulique ou électrique (16) du module de collecte, tandis que le module de collecte (9) comporte des mécanismes de connexion mobiles (21) entre le module de collecte (9) et une structure horizontale rotative (20) sur laquelle est montée la structure porteuse (18).

FIG.1

FIG.2

FIG.3

FIG.4

FIG.5

FIG.6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- FR 2412859 A1
- US 4376372 A
- ES 2281231